# EUROPÄISCHE PATENTANMELDUNG

(11) **EP 3 594 475 A1**
(43) Veröffentlichungstag der Anmeldung: **15.01.2020**
(21) Anmeldenummer: 18182564.7
(22) Anmeldetag: 10.07.2018
(51) Int. Cl.: F02C 7/14, F02C 7/224, F02C 9/28, F02C 9/32

(54) **VERFAHREN ZUM BETREIBEN EINER GASTURBINENANLAGE MIT GASFÖRMIGEM BRENNSTOFF**

(71) Anmelder: Siemens Aktiengesellschaft, 80333 München (DE)
(72) Erfinder: Beckmann, Björn, 47057 Duisburg (DE); Nauber, Niklas, 45134 Essen (DE); Over, Maarten, 40883 Ratingen (DE)

(57) **Zusammenfassung**

Verfahren zum Betreiben einer Gasturbinenanlage mit gasförmigem Brennstoff, der durch eine Gasleitung (6) zur Gasturbinenanlage transportiert, in einer Brennkammer (4) verbrannt und anschließend einer Gasturbine zugeführt wird. In der Gasleitung (6) ist zumindest eine Armatur (12a, 12b) zur Durchflussregelung des Brennstoffs zur Brennkammer (4) eingebaut, wobei für die Armatur (12a, 12b) eine kritische Öffnungsposition (Sₖᵣᵢₜ) definiert wird. Im Hinblick auf ein verbessertes Verfahren zum Betreiben einer Gasturbinenanlage, bei welchem im Falle eines nicht ausreichenden Drucks in der Gasleitung (6) die Leistung (P) der Gasturbinenanlage möglichst lange maximal hoch gehalten wird, ist es vorgesehen, dass wenn die Armatur (12a, 12b) dabei ist, die kritische Öffnungsposition (Sₖᵣᵢₜ) zu überschreiten, eine Temperatur (T_{B}) des Brennstoffs in der Gasleitung (6) reduziert wird.

## Beschreibung

Die Erfindung betrifft ein Verfahren zum Betreiben einer Gasturbinenanlage mit gasförmigem Brennstoff, der durch eine Gasleitung zur Gasturbinenanlage transportiert, in einer Brennkammer verbrannt und anschließend einer Gasturbine zugeführt wird. Die Erfindung betrifft weiterhin eine Steuervorrichtung zur Durchführung des Verfahrens sowie eine Gasturbinenanlage mit einer solchen Steuervorrichtung.

Gasturbinenanlagen werden in der Regel über eine Gasleitung mit Erdgas als Brennstoff versorgt. Dabei ist der optimale Betrieb der Gasturbinenanlage von der Qualität des Brennstoffs, dem richtigen Druck und der richtigen Temperatur abhängig. Ein minimaler erforderlicher Druck, der als Voraussetzung für den Betrieb der Gasturbinenanlage festgelegt wird und gewährleistet werden muss, hängt ebenfalls von verschiedenen Einsatz- und Umweltbedingungen ab, z.B. Turbinenlast, Umgebungstemperatur, Umgebungsdruck, Gaszusammensetzung, Gastemperatur, etc.. Aufgrund verschiedener Situationen kann jedoch der Druck in der Gasleitung nicht ausreichend sein, z.B. durch Druckschwankungen im lokalen Gasnetz, Ausfälle in den Leitungen zu und in der Gasturbinenanlage, Ausfall des Gasverdichters, wenn einer vorhanden ist, Schwankungen in der Gasqualität, Druckverluste entlang des Gasleitungssystems, Erhöhung der Feuerleistung, usw.. Im Falle, dass die Gasturbinenverbrennung von der genauen Verteilung des Massenstroms an Brennstoff auf zwei oder mehrere Stufen (z.B. Hauptbrenner und Pilot-Brenner) abhängt, kann dabei die Verbrennungsstabilität in den oben genannten Situationen nicht mehr garantiert werden.

Aus der EP 1 730 444 B1 ist es bekannt, zur Gewährleistung eines größeren Versorgungsdrucks in einer Gasleitung als der Druck in der Brennkammer, die Brennstofftemperatur zu reduzieren. Dies erfolgt jedoch stets in Kombination mit weiteren Maßnahmen zur Drosselung der Leistungssteigerung der Gasturbine, die eine höhere Priorität als die Reduzierung der Brennstofftemperatur haben. Die Motivation dabei ist, durch eine Stabilisierung des Brennstoffversorgungsdruckes Flammenrückschläge zu vermeiden, durch welche die Betriebssicherheit der gesamten Brennstoffversorgung gefährdet wird und die Gasturbinenanlage für einen beträchtlichen Zeitraum ausfallen kann. Die Maßnahmen zur Leistungs- und ggf. Gastemperaturreduzierung werden abhängig von festgelegten Druckkurven bzw. Druckkennlinien eingeleitet. Die Druckkennlinien müssen sich auf Auslegungsrechnungen und/oder Erfahrungswerte von anderen Maschinen stützen. Wird der von der Leistung abhängige Brennkammerdruck berücksichtigt, so ist der Gasdruck ein ungefähres Maß für den maximal einstellbaren Brennstoffvolumenstrom. Aufgrund von Berechnungsungenauigkeiten und natürlichen Schwankungen von Maschine zu Maschine (z.B. durch Fertigungstoleranzen) sowie zeitlich veränderlichen Druckverlustbeiwerten über das Gassystem und den Brenner (Verschleiß bzw. Verschmutzung), unterliegt der maximal einstellbare Brennstoffvolumenstrom für einen bestimmten Gasdruck dabei einer gewissen Streuung.

Der Erfindung liegt daher die Aufgabe zugrunde, die Nachteile des Standes der Technik zu beheben und ein verbessertes Verfahren zum Betreiben einer Gasturbinenanlage vorzuschlagen, bei welchem im Falle eines nicht ausreichenden Drucks in der Gasleitung die Leistung der Gasturbinenanlage möglichst lange maximal hoch gehalten wird.

Die Aufgabe wird erfindungsgemäß gelöst durch ein Verfahren einer Gasturbinenanlage mit gasförmigem Brennstoff, der durch eine Gasleitung zur Gasturbinenanlage transportiert, in einer Brennkammer verbrannt und anschließend einer Gasturbine zugeführt wird, wobei in der Gasleitung zumindest eine Armatur zur Durchflussregelung des Brennstoffs zur Brennkammer eingebaut ist, wobei für die Armatur eine kritische Öffnungsposition definiert wird und wenn die Armatur dabei ist die kritisehe Öffnungsposition zu überschreiten, eine Temperatur des Brennstoffs in der Gasleitung reduziert wird.

Die Aufgabe wird weiterhin erfindungsgemäß gelöst durch eine Steuervorrichtung zur Durchführung eines derartigen Verfahrens.

Die Aufgabe wird schließlich erfindungsgemäß gelöst durch eine Gasturbinenanlage mit einer solchen Steuervorrichtung.

Die in Bezug auf das Verfahren nachstehend angeführten Vorteile und bevorzugten Ausgestaltungen lassen sich sinngemäß auf die Steuervorrichtung sowie die Gasturbinenanlage übertragen.

Mit Armatur wird hierbei jegliche Vorrichtung zur Steuerung oder Regelung des Massenstroms in der Gasleitung bezeichnet. Die Armatur ist insbesondere in der Lage im geschlossenen Zustand die Gasleitung vollständig abzusperren, so dass der Gasstrom unterbrochen wird. Die Armatur ist bevorzugt als ein Steuer- oder Regelventil ausgestaltet, jedoch kann sie auch nach Art einer Klappe, eines Schiebers oder eines Hahns ausgebildet sein.

Der Erfindung liegt die Erkenntnis zugrunde, dass eine besonders zuverlässige Steuerbarkeit der Gasturbinenablage erreicht wird, indem als Kriterium, wann eine Absenkung der Brennstofftemperatur erforderlich ist, die Stellung der Durchfluss-Armatur herangezogen wird. Die Position der Armatur ist ein direktes Maß für den tatsächlich benötigten Druck vor der Brennkammer bzw. dafür, wie weit der Brennstoffmassenstrom noch angehoben werden kann, als Reaktion auf einen unzureichenden Druck in der Gasleitung. Die Maßnahmen greifen dabei nur ein, wenn dies wirklich notwendig ist, somit bleibt die eingestellte Sollleistung der Gasturbine so lang wie möglich unverändert. Im Gegensatz zum Stand der Technik zeichnet sich das Verfahren insbesondere dadurch aus, dass es lastunabhängig ist, d.h. die Position der Armatur, in Korrelation mit der kritischen Öffnungsposition gebracht wird, ist ein festes Kriterium und ist unabhängig vom Betriebspunkt.

Die aktuelle Position der Armatur ist stets bekannt, da der Massenstrom in der Gasleitung, ein Teil von dem die Armatur ist, bekannt ist. Insbesondere wird die Stellung der Armatur in Abhängigkeit des Massenstroms eingestellt. Dieser wird direkt gemessen oder indirekt anhand von verschiedenen Parametern bestimmt. Wenn die Armatur sich in der kritischen Öffnungsposition befindet, jedoch der Druck in der Gasleitung nicht ausreichend ist, insbesondere da die Anforderungen an den Druck steigen oder der Druck in der Leitung sinkt, ist die Absenkung der Gastemperatur als Erstmaßnahme einzuleiten, damit die Sollleistung aufrecht erhalten bleibt. Die Temperatur des Brennstoffs hat einen wesentlichen Effekt auf den Druck in der Gasleitung. Durch die Reduzierung der Gastemperatur steigt die Dichte des Gases, was zu geringeren Druckverlusten im Brennstoffsystem führt.

Bevorzugt liegt die kritische Öffnungsposition der Armatur im Bereich oberhalb 70% der maximalen Öffnungsposition. Die maximale Öffnungsposition ist die Stellung, bei welcher der Massenstrom in der Gasleitung am größten ist. Die entscheidende, kritische Öffnungsposition der Armatur ist damit nicht zwingend die maximal offene Position der Armatur (jedoch kann auch die kritische Öffnungsposition auch durch die maximale Öffnungsposition definiert sein), sondern eine Stellung mit geringfügig minimiertem Durchfluss. Der Vorteil hierbei ist, dass auf schnelle, kurzfristige Änderungen der Betriebsparameter, wie z.B. Schwankungen in der Qualität des Brennstoffs, durch ein weiteres Öffnen der Armatur reagiert werden kann. Die kritische Öffnungsposition kann zudem an die Betriebsbedingungen nachträglich angepasst werden, indem sie im Betrieb geändert wird.

Die Reduzierung der Temperatur des Brennstoffs kann über aktive Kühlmaßnahmen erfolgen. Vorzugsweise weist jedoch die Gasturbinenanlage ein Vorwärmsystem für den Brennstoff auf und die Temperatur des Brennstoffs in der Gasleitung wird reduziert, indem die dem Brennstoff zugeführte Wärme im Vorwärmsystem verringert wird. Dies ist eine besonders einfache und effiziente Vorgehensweise zur Temperaturabsenkung, die keine zusätzliche Hardware erfordert und mit keinem energetischen Aufwand verbunden ist.

Gemäß einer bevorzugten Ausführungsform wird ein Schwellwert für die minimale Temperatur des Brennstoffs unter Berücksichtigung eines Betriebsparameters der Gasturbinenanlage bestimmt und die Reduzierung der Temperatur des Brennstoffs in der Gasleitung wird angehalten, wenn der Schwellwert erreicht ist.. Es kann in der Gasturbinenanlage potentielle Beschränkungen geben, so dass das Einhalten einer Mindestgastemperatur erforderlich sein kann. Nei niedrigen Gastemperaturen können z.B. Probleme bezüglich der Verbrennungsstabilität und/oder Emissionen auftreten. Ein solcher Betriebsparameter ist z.B. der NOx-Wert im Abgas, der ein zusätzliches Kriterium darstellt, anhand dessen entschieden wird, ob das erfindungsgemäße Verfahren gestartet bzw. weiter geführt wird. Eine Überwachung eines festen Minimalwerts der Temperatur des Brennstoffs kann bei Gasen mit erhöhten Anteilen höherer Kohlenwasserstoffe vorgesehen sein, da bei niedriger Gastemperatur die Gefahr der Kondensatbildung besteht. An sehr kalten Standorten besteht außerdem die Gefahr der Vereisung bei niedriger Gastemperatur, ein fester Minimalwert von 5°C hat sich hierbei als vorteilhaft erwiesen. Mit einem Anhalten der Reduzierung der Temperatur des Brennstoffs wird hierbei standartmäßig eine Unterbrechung des Vorgangs, wenn dieser bereits initiiert wurde, bezeichnet. Alternativ, sollte die Kühlung des Brennstoffs noch nicht aktiv sein, wenn der Schwellwert für die Emissionen bereits erreicht ist, wird auf die Gaskühlung verzichtet, solange der Emissionswert dem Schwellwert entspricht.

Zweckdienlicherweise sind in der Gasleitung mehrere Armaturen eingebaut und die Position jeder der Armaturen wird herangezogen. Bei mehrstufigen Brennern ist in den Leitungen zu den einzelnen Stufen, z.B. zum Hauptbrenner und Pilot-Brenner, üblicherweise je eine Armatur zur Durchflussregelung vorgesehen. Wenn zumindest eine der Armaturen sich in der kritischen Öffnungsposition befindet und nicht mehr auf weiter wachsende Massenflussforderungen reagieren kann, wird die Temperatur des Brennstoffs in der Gasleitung, wie bereits erläutert, reduziert.

In den Fällen, bei denen Schwankungen in der Gasqualität die Ursache für den nicht ausreichenden Druck in der Gasleitung sind, wird die Absenkung der Brennstofftemperatur in der Regel ausreichend sein. Sollte die Reduzierung der Brennstofftemperatur jedoch die Druckanforderung nicht erfüllen können, wird vorzugsweise ergänzend dazu eine Turbinenleistung reduziert. Erst wenn die Druckanforderungen bei erreichter kritischer Öffnungsposition der Armatur trotz einer Reduktion der Temperatur nicht erfüllt werden können, wird die Turbinenleistung geregelt abgesenkt, insbesondere indem ein reduzierter Leistungssollwert vorgegeben wird. In Notfällen kann sogar ein Gasturbinen-Shutdown erfolgen. Dabei sollen beide Maßnahmen, die Absenkung der Gastemperatur sowie die Leistungsreduktion, derart miteinander kombiniert werden, dass die Leistung so lange wie möglich unverändert bzw. möglichst hoch bleibt, wobei stets darauf zu achten ist, dass die Armatur nicht die kritische Öffnungsposition überschreitet. Wichtig dabei ist die Priorisierung beider Maßnahmen, d.h. sie werden ggf. gleichzeitig eingeleitet, jedoch wird sobald wie möglich die Turbinenleistung wieder angehoben. Eine Reduzierung der Turbinenleistung wird insbesondere als schnelle Reaktion auf einen besonders großen Druckgradienten eingeleitet, wenn alleine die Reduzierung der Brennstofftemperatur nicht ausreicht, um dem Druckgradienten entgegenzuwirken.

Ein Ausführungsbeispiel der Erfindung wird anhand einer Zeichnung näher erläutert. Hierin zeigen:
- FIG 1: schematisch und stark vereinfacht ein Brennstoffsystem einer Gasturbinenanlage, und
- FIG 2: in einem Diagramm den zeitlichen Verlauf verschiedener Parameter der Gasturbinenanlage.

Gleiche Bezugszeichen haben in den Figuren die gleiche Bedeutung.

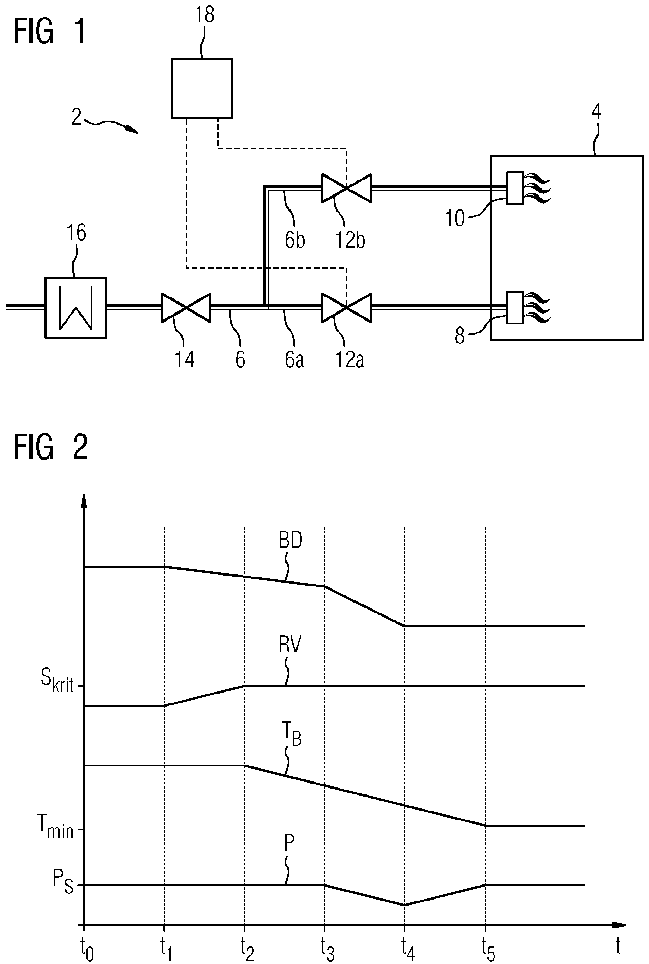

In FIG 1 ist schematisch der Aufbau eines Brennstoffsystems 2 gezeigt, welches Teil einer nicht näher gezeigten Gasturbinenanlage ist, in der Erdgas als Brennstoff verwendet wird. Die Gasturbinenanlage umfasst in der Regel einen Verdichter, eine Brennkammer 4 sowie eine Gasturbine, an der z.B. ein Generator zum Erzeugen von Strom gekoppelt ist.

Das Brennstoffsystem 2 umfasst eine Gasleitung 6, über welche gasförmiger Brennstoff der Brennkammer 4 zugeführt wird. In der Brennkammer 4 sind insbesondere mehrere Brenner angeordnet, die im gezeigten Ausführungsbeispiel mehrstufig ausgebildet sind und die in der Figur symbolisch durch einen Hauptbrenner 8 sowie einen Pilot-Brenner 10 dargestellt sind. Zu jeder der Brennerstufen 8, 10 wird eine Teilleitung 6a, 6b abgezweigt, in welcher je ein Regelventil 12a, 12b eingebaut ist. Die Gasleitung 6 enthält zudem ein Notfall-Ventil 14. Stromauf des Notfall-Ventils 14 ist an der Gasleitung 6 zudem ein Wärmetauscher 16 angeordnet, der Teil eines Vorwärmsystems ist, welcher dazu dient, den Brennstoff in der Gasleitung 6 vorzuwärmen.

Die Gasturbinenanlage umfasst weiterhin eine Steuer- bzw. Regelvorrichtung 18, welche unter anderem die Position der Regelventile 12a, 12b regelt. In der Regelvorrichtung 18 ist dabei eine kritische Öffnungsposition für die Regelventile 12a, 12b hinterlegt, die z.B. bei 80% einer maximalen Öffnungsposition der Regelventile 12a, 12b liegt. Die kritische Öffnungsposition kann dabei beispielsweise auch bei 70%, 75%, 85%, 90%, 95% der maximalen Öffnungsposition der Regelventile 12a, 12b liegen oder der maximalen Öffnungsposition entsprechen.

Der Verlauf des erfindungsgemäßen Verfahrens ist aus FIG 2 ersichtlich. Allgemein gilt, dass die Position des jeweiligen Regelventils 12a, 12b über einen Regelkreis in der Steuer- bzw. Regelvorrichtung 18 immer so eingestellt wird, dass die Gasturbine eine vorgegebene Leistung bzw. Verbrennungstemperatur fährt. Sie reagiert somit indirekt automatisch auf Schwankungen in den folgenden Größen: Erdgasversorgungsdruck, Erdgastemperatur, Erdgasqualität, Umgebungsbedingungen, Druckverlust über das Erdgasversorgungssystem und den Brenner (Verschmutzung/Verschleiß) und/oder Wirkungsgrad der Gasturbine (Verschleiß). Alle diese Parameter stellen mögliche Störfaktoren dar, auf deren Grundlage die Position der Regelventile 12a, 12b geregelt wird, um dadurch insbesondere eine Turbinenleistung P einzustellen.

Als Störgröße wird in FIG 2 ein absinkender Erdgasversorgungsdruck BV betrachtet. Anstelle eines absinkenden Erdgasdrucks könnte alternativ eine schlechter werdende Gasqualität, eine sinkende Umgebungstemperatur, eine steigende Umgebungsluftfeuchte, ein steigender Umgebungsdruck, eine Verschmutzung von Brenner oder Erdgassystemkomponenten, ein verringerter Gasturbinenwirkungsgrad, etc. verwendet werden.

Gemäß FIG 2 ist vom Zeitpunkt t₀ bis Zeitpunkt t₁ ein Brennstoffversorgungsdruck BD konstant, eine Regelventilstellung RV liegt unterhalb einer kritischen Öffnungsposition Sₖᵣᵢₜ. Die Brennstofftemperatur T_{B} und die Turbinenleistung P bleiben stabil auf ihrem Sollwert (P_{S} für die Turbinenleistung).

Von t₁ bis t₂ sinkt der Brennstoffversorgungsdruck BD in der Gasleitung 6 ab. Um die Turbinenleistung P (bzw. den Brennstoffmassenstrom) konstant zu halten, wird das entsprechende Regelventil bzw. beide Regelventile 12a, 12b weiter geöffnet, bis eine kritische Öffnungsposition Sₖᵣᵢₜ erreicht ist.

Im Zeitraum von t₂ bis t₃ sinkt der Brennstoffversorgungsdruck BD weiter ab. Die Regelventile 12a, 12b haben ihre vordefinierte kritische Öffnungsposition Sₖᵣᵢₜ erreicht, deshalb werden sie ab t₃ nicht weiter geöffnet, sondern bleiben in Sₖᵣᵢₜ. Um die Leistung P (bzw. den Brennstoffmassenstrom) konstant zu halten, wird die Gastemperatur T_{B} abgesenkt.

Ab t₃ sinkt der Brennstoffversorgungsdruck BD mit einem noch steileren Gradienten weiter ab. Der Gradient ist zu groß, um durch die träge Änderung der Brennstofftemperatur T_{B} kompensiert zu werden. Die Brennstofftemperatur T_{B} sinkt weiter mit ihrem Maximalgradienten ab, zusätzlich wird auch die Gasturbinenleistung P leicht reduziert, damit die Regelventile 12a, 12b weiterhin in der kritischen Öffnungsposition Sₖᵣᵢₜ gehalten werden.

Zwischen t₄ und t₅ stabilisiert sich der Brennstoffversorgungsdruck BD auf einem niedrigeren Niveau als das ursprüngliche. Die Regelventile 12a, 12b befinden sich weiterhin in der kritischen Öffnungsposition Sₖᵣᵢₜ. Die Turbinenleistung P ist seit t₃ noch immer unterhalb des Leistungssollwerts P_{S}, jedoch wird parallel mit der fortschreitenden Reduzierung der Brennstofftemperatur T_{B} die Gasturbinenleistung P wieder langsam auf den Sollwert P_{S} angehoben. Dabei ist darauf zu achten, dass die Brennstofftemperatur T_{B} oberhalb eines minimalen Schwellwerts Tₘᵢₙ bleibt, wobei der Schwellwert Tₘᵢₙ z.B. mit den NOx-Emissionen oder einem anderen Betriebsparameter der Gasturbinenanlage korreliert.

Ab t₅ wird erneut ein stabiler Betrieb erreicht. Die Gasturbinenleistung P hat ihren Sollwert P_{S} wieder erreicht und die Gasturbine wird mit abgesenkter Brennstofftemperatur T_{B} weiter betrieben. Erst, wenn die Regelventile 12a, 12b eine Stellung RV unterhalb der kritischen Öffnungsposition Sₖᵣᵢₜ annehmen, wird die Brennstofftemperatur T_{B} wieder angehoben (der Fall ist nicht abgebildet).

## Patentansprüche

1. Verfahren zum Betreiben einer Gasturbinenanlage mit gasförmigem Brennstoff, der durch eine Gasleitung (6) zur Gasturbinenanlage transportiert, in einer Brennkammer (4) verbrannt und anschließend einer Gasturbine zugeführt wird,
**dadurch gekennzeichnet, dass** in der Gasleitung (6) zumindest eine Armatur (12a, 12b) zur Durchflussregelung des Brennstoffs zur Brennkammer (4) eingebaut ist, wobei für die Armatur (12a, 12b) eine kritische Öffnungsposition (Sₖᵣᵢₜ) definiert wird und wenn die Armatur (12a, 12b) dabei ist, die kritische Öffnungsposition (Sₖᵣᵢₜ) zu überschreiten, eine Temperatur (T_{B}) des Brennstoffs in der Gasleitung (6) reduziert wird.

2. Verfahren nach Anspruch 1,
**dadurch gekennzeichnet, dass** die kritische Öffnungsposition (Sₖᵣᵢₜ) der Armatur (12a, 12b) oberhalb 70% einer maximalen Öffnungsposition liegt.

3. Verfahren nach einem der vorhergehenden Ansprüche,
**dadurch gekennzeichnet, dass** die Gasturbinenanlage ein Vorwärmsystem für den Brennstoff aufweist und die Temperatur (T_{B}) des Brennstoffs in der Gasleitung (6) reduziert wird, indem die dem Brennstoff zugeführte Wärme im Vorwärmsystem verringert wird.

4. Verfahren nach einem der vorhergehenden Ansprüche, **dadurch gekennzeichnet, dass** ein Schwellwert (Tₘᵢₙ) für die minimale Temperatur (T_{B}) des Brennstoffs unter Berücksichtigung eines aktuellen Werts für einen Betriebsparameter der Gasturbinenanlage bestimmt wird und die Reduzierung der Temperatur (T_{B}) des Brennstoffs in der Gasleitung (6) angehalten wird, wenn der Schwellwert erreicht ist.

5. Verfahren nach einem der vorhergehenden Ansprüche, **dadurch gekennzeichnet, dass** in der Gasleitung (6) mehrere Armaturen (12a, 12b) eingebaut sind und die Position jeder der Armaturen (12a, 12b) herangezogen wird.

6. Verfahren nach einem der vorhergehenden Ansprüche, **dadurch gekennzeichnet, dass** ergänzend eine Turbinenleistung (P) reduziert wird.

7. Steuervorrichtung (18) zur Durchführung des Verfahrens nach einem der vorhergehenden Ansprüche.

8. Gasturbinenanlage mit einer Steuervorrichtung (18) nach Anspruch 7.
